# EUROPEAN PATENT SPECIFICATION

(11) **EP 4 490 447 B1**
(45) Date of publication and mention of the grant of the patent: **24.06.2026**
(21) Application number: 23712072.0
(22) Date of filing: 09.03.2023
(51) Int. Cl.: F24H 15/12, F24D 19/10, F24H 15/242, F24H 15/414, F24H 15/45, F24H 15/464, G01M 3/32

(54) **SMART HEATING SYSTEM AND ASSOCIATED METHOD**
INTELLIGENTES HEIZSYSTEM UND ZUGEHÖRIGES VERFAHREN
SYSTÈME DE CHAUFFAGE INTELLIGENT ET PROCÉDÉ ASSOCIÉ

(30) Priority: 10.03.2022 GB 202203350
(43) Date of publication of application: 15.01.2025
(73) Proprietor: Intelligent Valves Ltd., Haywards Heath, Sussex RH16 2QD (GB)
(72) Inventor: BENSON, Paul Anthony, Haywards Heath Sussex RH16 2QD (GB)
(74) Representative: Cyrson, Matthew Dominic
(86) International application number: PCT/GB2023/050560
(87) International publication number: WO 2023/170419

(56) References cited:
- EP-A1- 3 489 781
- EP-A2- 1 517 128
- US-A1- 2018 245 801
- US-A1- 2020 393 324
- US-A1- 2021 018 393

## Description

The present invention relates to a smart heating system for detecting leaks and a method of identifying a location of a leak in a heating system.

A common type of heating system in domestic and commercial settings is a hot water heating system. A hot water heating system uses a boiler to heat water which is then circulated via a water circulation system to radiators to distribute heat. The cooled water is returned by the water circulation system to the boiler to be re-heated.

The water is typically at elevated pressure, for example being at around 1.5 bar (150 kPa).

Occasionally, leaks form in the water circulation system or radiators. Such leaks can cause water damage to the building, and result in a loss of pressure which can reduce the efficiency of the heating system.

A leak may not be easily visible or noticeable. As such, a user may only become aware of a leak once damage has already occurred to the building, or once the pressure has dropped below a level sufficient for operation of the heating system.

Even once the existence of a leak has been noticed, the location of the leak may not be apparent. Inspection of the pipes or radiators of the water circulation system can be difficult, particularly since sections of the pipes are usually concealed below floors or in walls.

US2018/245801 discloses evaluation of heating liquid pressure drops in a hydronic heating system. EP3489781 discloses a system and method for monitoring a central heating system. EP1517128 discloses a device and method for testing the fluid-tightness of a system by monitoring pressure. US2020393324 discloses a smart water valve. US2021018393 discloses a fluid leakage control apparatus, system and method.

Therefore, it would be desirable to have a system which allowed notification and identification of leaks within a water circulation system of a building.

The present invention seeks to provide a solution to this problem.

According to a first aspect of the present invention, there is provided a smart heating system for detecting leaks, the smart heating system comprising: a boiler for heating water; a plurality of radiators; a water circulation system for transporting water heated by the boiler to the radiators and returning water from the radiators to the boiler, each radiator having an inlet and an outlet connected to the water circulation system; a valve at or adjacent to the inlet and/or outlet of each radiator; an electronic pressure gauge at each radiator configured to measure a water pressure in the radiator and/or water circulation system adjacent to the radiator to generate a pressure reading, each electronic pressure gauge having an identifier; and a user electronic device having a user display, the user electronic device being communicatively connected with the electronic pressure gauges so as to be configured to receive the pressure readings and identifiers, and the user electronic device being configured to display pressure readings and identifiers.

Thus, the pressure readings and identifiers may be transmitted from the electronic pressure gauges to the user electronic device. If the pressure reading from one electronic pressure gauge is unexpectedly low or low relative to the pressure readings from at least one other pressure gauge, then the user may then be able to determine whether a leak is present. The user can also identify that the leak is in the piping upstream of the pressure gauge that provides the low reading, and downstream of a pressure gauge that provides a higher or normal reading. Alternatively, the user electronic device may automatically determine the presence and/or location of a leak via this method. The user or system may then close at least one upstream valve to prevent or limit loss of water via the leak. Repairs can then be carried out on the piping, which may be more time- and cost-efficient then typical, since the approximate location of the leak has already been identified.

Preferably, each electronic pressure gauge may comprise a wireless transmitter configured to transmit the pressure reading and identifier. This may remove a requirement to have wiring between the electronic pressure gauge and the user electronic device, and permits for a portable user electronic device, such as a smart mobile telephone.

Advantageously, the smart heating system may further comprise an electronic hub, each electronic pressure gauge being communicatively connected with the electronic hub so as to provide the pressure reading and the identifier to the electronic hub, the user electronic device being communicatively connected with the electronic hub so as to be configured to receive the pressure readings and identifiers therefrom. This may simplify connection of the user electronic device with the electronic pressure gauges, since the user electronic device would only need to connect with the hub, rather than each of the plurality of pressure gauges. Furthermore, the hub may have a processor for performing data analysis to identify the presence and/or location of a leak. As such, the analysis would not need to be carried out on the user electronic device, which may reduce a data processing requirement for the user electronic device.

Beneficially, the electronic hub may include a wireless receiver configured to receive the pressure readings and identifiers from the electronic pressure gauges. As such, a wired connection between the hub and pressure gauges may not be required.

In a preferable embodiment, the user electronic device may include a wireless receiver configured to receive the pressure readings and identifiers from the electronic pressure gauges or the electronic hub. As such, a wired connection between the hub and user electronic device may not be required.

Optionally, the smart heating system may further comprise a master electronic pressure gauge which is at the water circulation system and which is not at the radiators, the master electronic pressure gauge being communicatively connected with the user electronic device so as to provide a master pressure reading to the user electronic device, the user electronic device being configured to display the master pressure reading. The master pressure gauge can provide a reference reading for comparison with the pressure gauges associated with individual radiators.

Additionally, there may be a plurality of electronic pressure gauges which are at the water circulation system and which are not at the radiators, communicatively connected with the user electronic device so as to provide a plurality of water-circulation-system pressure readings to the user electronic device, the user electronic device being configured to display the plurality of water-circulation-system pressure readings. This may allow for the closer identification of the location of a leak, since a more precise location can be determined.

Preferably, the smart heating system may further comprise a master valve which is at the water circulation system and which is not at the radiators, for closing and opening the water circulation system. This may be of use for a parallel arranged water circulation system and/or if the leak is upstream of the first radiator.

Advantageously, there may be a plurality of valves which are at the water circulation system and which are not at the radiators, for isolating portions of the water circulation system. This may be of particular use for heating systems arranged in a parallel configuration, since in a parallel arrangement the valves at the radiators may not allow for closing of leaks in downstream sections of hot water piping.

Beneficially, the valves and/or the master valve may be electronically actuatable and may be communicatively connected to the user electronic device, the valves and/or master valve being controllable via the user electronic device. Thus, the valves can be automatically or remotely closed in response to a leak. Additionally, the valves can be remotely operated to adjust an amount of heat outputted by the radiator, thereby allowing easier actuation of the valves which can otherwise become difficult to manually turn.

In a preferably embodiment, the electronic pressure gauge and the valve at a given radiator may be contained within one housing which may allow for easier installation.

Optionally, each radiator may have an electronic pressure gauge upstream of the radiator and downstream of the radiator. Thus detection of a leak within a given radiator can be possible.

Additionally, an upstream electronic pressure gauge may be at the inlet of the radiator and a downstream electronic pressure gauge may be at the outlet of the radiator.

Preferably, each electronic pressure gauge of a radiator may include an indicator for indicating when the pressure reading is below a predetermined level. This may alert the user to the presence of a leak.

Advantageously, the indicator may be a visual indicator.

Beneficially, the visual indicator may be configured to emit a light when the pressure reading is below the predetermined level.

In a preferable embodiment, the radiators may be connected to the water circulation system in series.

Alternatively, the radiators may be connected to the water circulation system in parallel.

Optionally, the user electronic device may be a smart telephone.

According to a second aspect of the invention, there is provided a method of identifying a location of a leak in a heating system, the method comprising the steps of: providing a smart heating system according to a first aspect of the invention; the electronic pressure gauges at the radiators communicating pressure readings and associated identifiers to the user electronic device; determining a discrepancy in the pressure readings and identifying the location of the leak based on the identifier associated with the or each pressure reading having the discrepancy.

According to a third aspect of the invention, there is provided a leak detection kit for a smart heating system according to the first aspect of the invention, the kit comprising: a plurality of electronic pressure gauges for measuring a water pressure in the radiator and/or water circulation system adjacent to the radiator to generate a pressure reading, each electronic pressure gauge having an identifier; and a user electronic device having a user display, the user electronic device being communicatively connected with the electronic pressure gauges so as to be configured to receive the pressure readings and identifiers, and the user electronic device being configured to display pressure readings and identifiers.

According to a fourth aspect of the invention, there is provided a heating-system-leak-detecting device for a smart heating system according to a first aspect of the invention, the heating-system-leak-detecting device comprising: a housing; a valve in the housing; an electronic pressure gauge in the housing for measuring a water pressure in the radiator and/or water circulation system adjacent to the radiator to generate a pressure reading, each electronic pressure gauge having an identifier; a wireless transmitter in the housing for transmitting the pressure reading and identifier; and a visual indicator in the housing is configured to emit a light when the pressure reading is below the predetermined level.

According to a fifth aspect of the invention, there is provided a smart water system comprising: a water distribution system; a plurality of valves distributed around the water distribution system; a plurality of electronic pressure gauges, each electronic pressure gauge being at or adjacent to a valve and configured to measure a water pressure in the water distribution system adjacent to the valve to generate a pressure reading, each electronic pressure gauge having an identifier; and a user electronic device having a user display, the user electronic device being communicatively connected with the electronic pressure gauges so as to be configured to receive the pressure readings and identifiers, and the user electronic device being configured to display pressure readings and identifiers.

The invention will now be more particularly described, by way of example only, with reference to the accompanying drawings, in which:
Figure 1 shows a first embodiment of a smart heating system, in accordance with a first aspect of the invention;
Figure 2 shows an enlargement of a user electronic device and radiators of the smart heating system of Figure 1; and
Figure 3 shows a second embodiment of a smart heating system, in accordance with the first aspect of the invention.

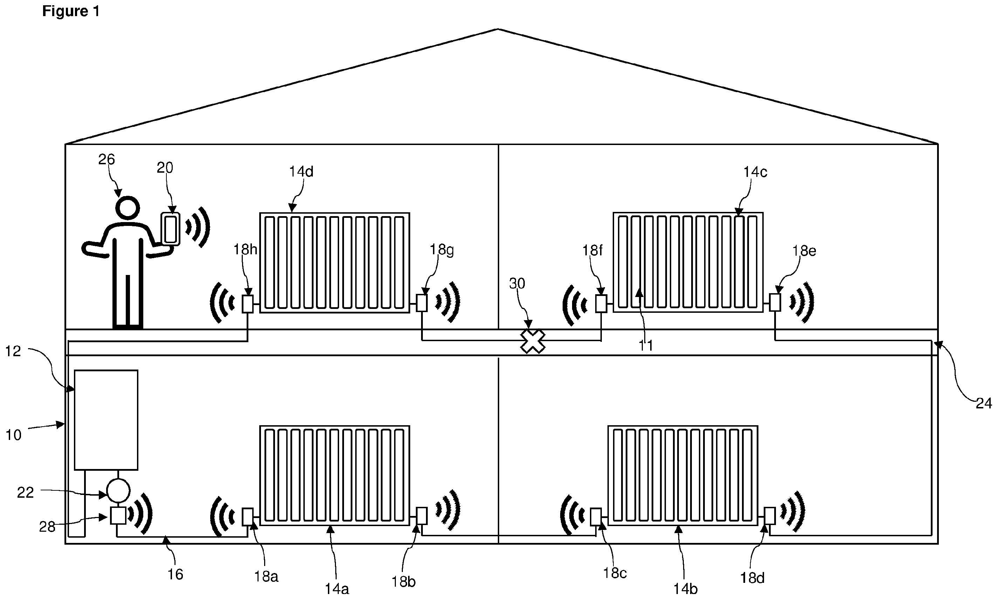

Referring firstly to Figure 1, there is shown a first embodiment of a smart heating system 10 in a building. The smart heating system 10 comprises a boiler 12, first, second, third and fourth radiators 14a, 14b, 14c, 14d, a water circulation system 16, first, second, third, fourth, fifth, sixth, seventh, and eighth radiator-leak-detecting devices 18a, 18b, 18c, 18d, 18e, 18f, 18g, 18h, and a user electronic device 20.

The boiler 12 is for heating water and this is distributed by the water circulation system 16 to the radiators 14a, 14b, 14c, 14d. The water circulation system 16 includes piping or conduits which extend from the boiler 12, to the different radiators 14a, 14b, 14c, 14d, and returns to the boiler 12. As such, the water circulation system 16 forms a closed-loop system. In Figure 1, the water flows in an anti-clockwise direction. The water circulation system 16 also preferably includes a pump 22 for moving the water around the piping. At least some of the piping may extend through the floor 24 of the building.

The first embodiment has the radiators 14a, 14b, 14c, 14d and water circulation system 16 arranged in series. As such, hot water which is heated by the boiler 12 flows to and through the first radiator 14a, then to and through the second radiator 14b, then to and through the third radiator 14c, then to and through the fourth radiator 14d, before being returned to the boiler 12 for re-heating.

Each radiator leak-detecting device 18a, 18b, 18c, 18d, 18e, 18f, 18g, 18h includes a valve and an electronic pressure gauge. There is here one leak-detecting device 18a, 18c, 18e, 18g at or adjacent to an inlet of each radiator 14a, 14b, 14c, 14d, and one leak-detecting device 18b, 18d, 18f, 18h at or adjacent to an outlet of each radiator 14a, 14b, 14c, 14d. However, it will be appreciated that there may only be one leak-detecting device per radiator 14a, 14b, 14c, 14d at or adjacent to either the inlet or the outlet.

Each valve is preferably configured to reduce and/or stop the flow through the water circulation system 16 at or adjacent to its position. Preferably, the valve can be adjusted or actuated to reduce and stop the amount of hot water flowing downstream of the radiator 14a, 14b, 14c, 14d. The valve is preferably remotely operable, and therefore can be electronically actuatable. However, it will be appreciated that manual or thermostatic radiator 14a, 14b, 14c, 14d valves can be considered.

Each electronic pressure gauge is configured to measure a water pressure in the radiator 14a, 14b, 14c, 14d and/or water circulation system 16 adjacent to the radiator 14a, 14b, 14c, 14d to generate a pressure reading. Therefore, the electronic pressure gauge may measure the pressure at the inlet or the outlet of the radiator 14a, 14b, 14c, 14d. Each electronic pressure gauge also has an identifier, for example a number.

A visual indicator may be provided on or at each leak-detecting device. For example, the visual indicator may be a light emitting device, such as a light emitting diode (LED).

The identifier and/or pressure readings may be stored on a memory device which may be contained within the leak-detecting device.

The leak-detecting devices 18a, 18b, 18c, 18d, 18e, 18f, 18g, 18h may also include a temperature sensor. For example, one leak-detecting device of each radiator 14a, 14b, 14c, 14d may have a temperature sensor.

The leak-detecting devices 18a, 18b, 18c, 18d, 18e, 18f, 18g, 18h may each include a wireless transmitter, for wirelessly transmitting the pressure readings and/or identifiers. The pressure readings may otherwise be referred to as pressure reading data, and the identifiers may otherwise be referred to as identification data. Additionally, the leak-detecting devices 18a, 18b, 18c, 18d, 18e, 18f, 18g, 18h may each include a wireless receiver. The wireless receiver and transmitter may be an antenna, such as a Bluetooth (RTM) antenna or a Wi-Fi (RTM) antenna or similar. Although wireless data communication is preferred, it will be appreciated that a wired connection may also be considered. In Figure 1, the leak-detecting devices are shown to be transmitting and/or receiving data wirelessly.

The leak-detecting device may include a processor or controller for instructing the transmission of pressure readings and/or identifiers, and/or for operating the valve.

The leak-detecting device may be powered by an electrical connection to a mains power supply. Alternatively, an on-board power supply may be considered, such as a battery.

The user electronic device 20 has a user display and is communicatively connected with the leak-detecting devices 18a, 18b, 18c, 18d, 18e, 18f, 18g, 18h so as to be configured to receive the pressure readings and identifiers from the leak-detecting devices 18a, 18b, 18c, 18d, 18e, 18f, 18g, 18h. The user electronic device 20 is configured to display the pressure readings and identifiers or derivatives thereof on the user display.

The user electronic device 20 is here a portable electronic device 20, such as a smart mobile telephone, and includes a wireless receiver configured to receive pressure readings and identifiers from the leak-detecting devices 18a, 18b, 18c, 18d, 18e, 18f, 18g, 18h. The user electronic device 20 also has a processor or controller and may have a power source, such as a battery. Preferably, the portable electronic device 20 also has a wireless transmitter for transmitting instructions to the leak-detecting devices 18a, 18b, 18c, 18d, 18e, 18f, 18g, 18h. The user electronic device 20 is shown to be wirelessly transmitting or receiving, and a user 26 is shown.

The smart heating system 10 may further have a master valve and/or a master electronic pressure gauge. These may be included together in a single housing as a master device 28. The master device 28 is not at or associated with any of the radiators 14a, 14b, 14c, 14d and is here upstream of the radiators 14a, 14b, 14c, 14d. Preferably, the master device 28 is at, adjacent to, or just downstream of the boiler 12.

The master electronic pressure gauge is configured to measure the pressure of the water circulation system 16 before the radiators 14a, 14b, 14c, 14d. As such, the master electronic pressure gauge provides a reference or base-line pressure reading, with which readings from the radiators 14a, 14b, 14c, 14d can be compared.

The master valve is configured to close the water circulation system 16 before the radiators 14a, 14b, 14c, 14d, and the valve may be electronically actuatable.

The master device 28 is preferably communicatively connected with the user electronic device 20 so as to provide the reference pressure reading thereto. This is preferably a wireless connection, and so the master device 28 may have a wireless transmitter. Additionally, the master device 28 is preferably communicatively connected to the user electronic device 20 so as to allow the master valve to be controlled. Such a connection may be a wireless connection via a wireless receiver. The wireless transmitter and/or receiver may be a wireless antenna, such as Bluetooth (RTM) antenna or a Wi-Fi (RTM) antenna or similar.

Whilst a single master device 28 is described and shown, at least one further electronic pressure gauge and/or valve may be included which is not associated with a specific radiator 14a, 14b, 14c, 14d. For example, such an electronic pressure gauge and/or valve may be between radiators 14a, 14b, 14c, 14d, and/or on the return line from the radiators 14a, 14b, 14c, 14d to the boiler 12.

Although not shown, and although the user electronic device 20 is described as being directly connected with the leak-detecting devices 18a, 18b, 18c, 18d, 18e, 18f, 18g, 18h, it will be appreciated that an intermediate electronic hub may be used instead. As such, the system may include the electronic hub, and the leak-detecting devices 18a, 18b, 18c, 18d, 18e, 18f, 18g, 18h may be communicatively connected therewith to provide pressure readings and identifiers to the hub. The communicative connection may be via a wired or wireless connection. The user electronic device 20 would be communicatively connectable with the electronic hub, and therefore the user electronic device 20 may receive the pressure readings and the identifiers from the hub. The hub may also relay instructions to the leak-detecting devices 18a, 18b, 18c, 18d, 18e, 18f, 18g, 18h from the user electronic device 20 with regards to opening and closing the valves.

In use, the leak-detecting devices 18a, 18b, 18c, 18d, 18e, 18f, 18g, 18h may be installed on each radiator 14a, 14b, 14c, 14d, for example by removing any pre-existing manual valve, lock-shield valve or thermostatic radiator valve, and connecting one of the leak-detecting devices 18a, 18b, 18c, 18d, 18e, 18f, 18g, 18h in its place. The master device 28 and/or electronic hub may be installed if being used. If the electronic hub is being used, the electronic hub should be connected to each of the leak-detecting devices 18a, 18b, 18c, 18d, 18e, 18f, 18g, 18h so as to receive pressure readings therefrom, for example being wirelessly connected. The user electronic device 20 may then be connected with the electronic hub, or directly to the leak-detecting devices 18a, 18b, 18c, 18d, 18e, 18f, 18g, 18h if the electronic hub is not being used.

A computer program or application may be installed on the user electronic device 20 for compatibility with the leak-detecting devices 18a, 18b, 18c, 18d, 18e, 18f, 18g, 18h and/or the electronic hub.

The pressure gauges may provide pressure readings, along with the identifiers, to the electronic hub and/or user electronic device 20 at intervals. For example, a pressure reading may be transmitted every minute, hour, or day. Additionally or alternatively, pressure readings may be transmitted on request from the user. For example, the user may make a demand via the user electronic device 20 that the pressure gauges transmit a reading.

The user electronic device 20 may simply show the different pressure readings and associated identifiers to the user for the user to identify anomalies.

Alternatively, the user electronic device 20 or hub may determine anomalies in the pressure readings, and thereby identify a leak. As such, the user electronic device 20 may determine whether a pressure reading from one or more pressure gauges is significantly lower than that of one or more other pressure gauges, including that of the master pressure gauge. The presence of a lower pressure reading from one pressure gauge suggests the presence of a leak between the pressure gauge reporting a lower pressure and the pressure gauge reporting a higher pressure.

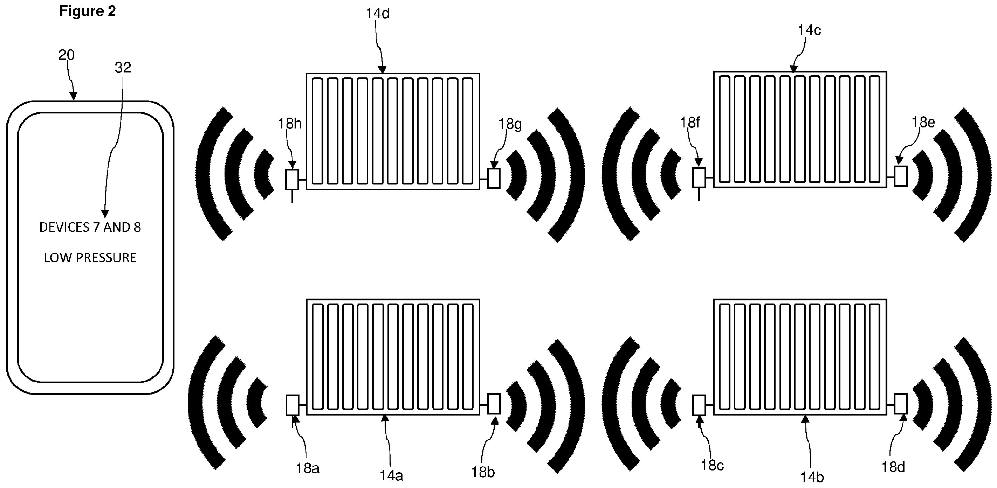

For example, in Figure 1 there is a leak 30 in the water circulation system 16. The pressure gauge of the leak-detecting devices upstream of the leak 30, that is the first, second, third, fourth, fifth and sixth leak-detecting devices 18a, 18b, 18c, 18d, 18e, 18f, may provide a higher pressure reading. The pressure gauges of the leak-detecting devices downstream of the leak 30, that is leak-detecting devices 18g, 18h seven and eight, may provide a lower pressure reading. The user electronic device 20 or hub, in other words a processor or controller thereof, may identify such a difference, and thereby provide a warning that the seventh and eight devices 18g, 18h show low pressure. Figure 2 shows an example of the message or notification 32 that might appear on the user electronic device 20 if such pressure readings are received. Such a message 32 may be considered to be a derivative of the pressure readings and identifiers.

Alternatively, a leak may be detected by determining a lower pressure reading from one of the leak-detecting devices 18a, 18b, 18c, 18d, 18e, 18f, 18g, 18h relative to a pressure reading of the master device 28.

The user may then be provided an option to close one or more of the valves upstream of the seventh and eight devices, in order to prevent further water from escaping from the leak and thereby preventing or limiting damage to the system. The user may use a control on the user electronic device 20, such as by pressing a button displayed on a touch screen, to instruct the user electronic device 20 to transmit an instruction, or instruction data, to at least any one of the first, second, third, fourth, fifth and sixth leak-detecting devices 18a, 18b, 18c, 18d, 18e, 18f and/or the master valve to close.

The relevant flow position of each leak-detecting devices 18a, 18b, 18c, 18d, 18e, 18f, 18g, 18h may be recorded by the user electronic device 20, hub, and/or the leak-detecting devices 18a, 18b, 18c, 18d, 18e, 18f, 18g, 18h themselves. For example, the user electronic device 20 may record on a memory device that the first leak detecting device 18a is upstream of the second leak detecting device 18b, that the second leak detecting device 18b is upstream of the third leak detecting device 18c and so on. Additionally, the leak-detecting devices 18a, 18b, 18c, 18d, 18e, 18f, 18g, 18h may be given names corresponding to a room to identify their location in the building to be more readily recognisable to a user, for example "front room". The user electronic device 20 may even include a digital schematic diagram of the layout of the building and the associated location of the radiators 14a, 14b, 14c, 14d and leak-detecting devices 18a, 18b, 18c, 18d, 18e, 18f, 18g, 18h.

The system 10 may be configured to automatically close the relevant valves. For example, upon identification of a leak by the user electronic device 20 and/or electronic hub, as per the above, the user electronic device 20 and/or electronic hub may automatically transmit instruction data to the relevant valve.

In particular, this may be that, upon identification of a pressure drop at a given gauge, the user electronic device 20 and/or electronic hub may transmit instruction data to a valve upstream of the given gauge to close the valve. In the instance of multiple valves upstream, preferably the instruction data is transmitted to the valve immediately upstream of the given gauge.

Additionally or alternatively, the leak-detecting devices 18a, 18b, 18c, 18d, 18e, 18f, 18g, 18h may themselves be in communication with each other, and communicate pressure readings to each other along with relative flow positional data. When one leak-detecting device 18f receives a lower or significantly lower pressure reading from the leak-detecting device 18g which is immediately downstream of its position, said leak detecting device 18f may close its valve automatically. The leak-detecting devices 18a, 18b, 18c, 18d, 18e, 18f, 18g, 18h may each have a controller, circuitry, chip or processor configured to provide this functionality. As such, the user electronic device could be omitted in some instances.

With regards to repairing the leak, the location of the leak would be known to be between the sixth and seventh leak-detecting devices 18f, 18g. The hub and/or user electronic device 20 may record this information or data on a memory device so that it can be accessed later. As such, the user, a plumber or other contractor, may be able to more readily repair the leak, since the approximate location of the leak is already known. Therefore, for example, only a small section of the floor 24 may need to be removed so as to access the piping which has the leak. A cost and time of repair may therefore be reduced.

To alert the user to the location of the leak, the LED of a leak detecting device may illuminate if the pressure reading is below a predetermined level, for example if it is below 1.5 bar (150 kPa). This would indicate to the user that they should check the user electronic device 20, and/or that there is likely to be a leak upstream of the leak detecting device with the illuminated LED. Alternatively, the LED may illuminate if the pressure reading is at a low level relative to pressure readings of other leak-detecting devices 18a, 18b, 18c, 18d, 18e, 18f, 18g, 18h. In this case, the leak-detecting devices 18a, 18b, 18c, 18d, 18e, 18f, 18g, 18h may themselves be in communication with each other, and communicate pressure readings to each other along with relative flow positional data. When one leak detecting device 18g receives a higher or significantly higher pressure reading from the leak detecting device 18f which is immediately upstream of its position, said leak detecting device 18g may illuminate its LED. Instead of simply illuminating, the LED or other light emitting device may flash. Further information or data regarding the leak may be available at the user electronic device 20.

The user electronic device 20 may provide alerts to the user in the event of an automatic detection of a leak. For example, the user electronic device 20 may provide a visual, audible, or haptic notification to the user.

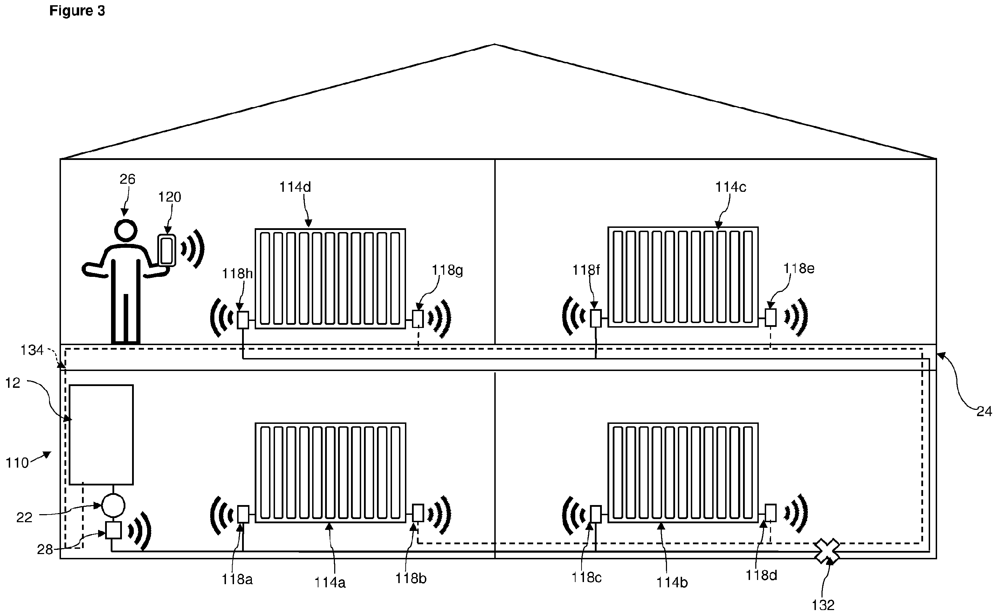

Referring now to Figure 3, there is shown a second embodiment of a smart heating system 110 in which the radiators 114a, 114b, 114c, 114d and water circulation are connected in parallel. A return line 134 is indicated in dashed line. A leak 132 is shown in the piping between the second and third radiators 114b, 114c. As such, the fifth, sixth, seventh, and eighth leak-detecting devices 118e, 118f, 118g, 118h would provide lower pressure readings than the first, second, third, and fourth leak-detecting devices 118a, 118b, 118c, 118d. Therefore, the user electronic device 120 would identify that a leak is between the fourth and fifth leak-detecting devices 118e, 118f. This information may be recorded and the user, a plumber or other contractor, may be able to more readily repair the leak, since the approximate location of the leak is already known. However, since the system is in a parallel arrangement, closing the valves of the leak-detecting devices 118a, 118b, 118c, 118d may not result in prevention of water flowing out of the leak. However, the master valve or additional valves along the line of the heating system, if included, may be closed.

Either embodiment of the smart heating system 10; 110 may allow for detection and closure of leaks within a radiator 14a, 14b, 14c, 14d; 114a, 114b, 114c, 114d. For example, if a pressure reading of the third leak detecting device 18c; 118c is greater than that of the fourth leak detecting device 18d; 118d, then it can be determined that there is a leak in the second radiator 14b; 114b. The user electronic device 20; 120 or hub may determine this via a processor and the user electronic device 20 may report this to the user and/or automatically close at least the upstream valve of the radiator 14b; 114b so as to prevent loss of water via said radiator 14b; 114b. The leak in the radiator 14b; 114b can then be repaired.

Additionally, the smart heating system 10 allows for control of the amount of heat outputted by individual radiators 14a, 14b, 14c, 14d. The user electronic device 20 can be used to instruct the leak-detecting devices 18a, 18b, 18c, 18d, 18e, 18f, 18g, 18h to open and/or close the valves at one or more intermediate positions between fully open and fully closed. Thus, the amount of hot water flowing through each radiator 14a, 14b, 14c, 14d, and therefore the amount of heat being provided by each radiator 14a, 14b, 14c, 14d can be tuned remotely, without requiring manual actuation of the valve.

Although water is described as being in the heating system, it will be appreciated that other fluids may be used, such as steam or oil.

Whilst a heating system is described, it will be appreciated that the same principle may be applied to other water circulation systems. For example, the same system of pressure gauges and valves may be used on a sprinkler system, such as at a golf course. Where at least one pressure gauge detects a lower-than-expected pressure, an upstream valve can be instructed to close to prevent loss of water via a leak.

Although a leak detecting device with both a valve and a pressure gauge is described, it will be appreciated that separate valves and pressure gauges may be considered.

It is therefore possible to provide a heating system for detecting leaks. A plurality of valves and pressure gauges are used on a water circulation system. The pressure gauges permit detection of lower-than-expected pressures, and the valves allow for the leak to be closed. A user electronic device provides information to the user and allows the user to interact with the system, for example to close valves. The valves and pressure gauges are preferably installed on radiators.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

## Claims

1. A smart heating system (10; 110) for detecting leaks, the smart heating system (10; 110) comprising:
a boiler (12) for heating water;
a plurality of radiators (14a, 14b, 14c, 14d; 114a, 114b; 114c; 114d);
a water circulation system (16) for transporting water heated by the boiler (12) to the radiators (14a, 14b, 14c, 14d; 114a, 114b; 114c; 114d) and returning water from the radiators (14a, 14b, 14c, 14d; 114a, 114b; 114c; 114d) to the boiler (12), each radiator (14a, 14b, 14c, 14d; 114a, 114b; 114c; 114d) having an inlet and an outlet connected to the water circulation system (16); and
a valve at or adjacent to the inlet and/or outlet of each radiator (14a, 14b, 14c, 14d; 114a, 114b; 114c; 114d),
**characterised in that** there is an electronic pressure gauge at each radiator (14a, 14b, 14c, 14d; 114a, 114b; 114c; 114d) configured to measure a water pressure in the radiator (14a, 14b, 14c, 14d; 114a, 114b; 114c; 114d) and/or water circulation system (16) adjacent to the radiator (14a, 14b, 14c, 14d; 114a, 114b; 114c; 114d) to generate a pressure reading, each electronic pressure gauge having an identifier; and
a user electronic device (20; 120) having a user display, the user electronic device (20; 120) being communicatively connected with the electronic pressure gauges so as to be configured to receive the pressure readings and identifiers, and the user electronic device (20; 120) being configured to display pressure readings and identifiers and/or a derivative thereof.

2. A smart heating system (10; 110) as claimed in claim 1, wherein each electronic pressure gauge comprises a wireless transmitter configured to transmit the pressure reading and identifier.

3. A smart heating system as claimed in claim 1 or claim 2, further comprising an electronic hub, each electronic pressure gauge being communicatively connected with the electronic hub so as to provide the pressure reading and the identifier to the electronic hub, the user electronic device being communicatively connected with the electronic hub so as to be configured to receive the pressure readings and identifiers therefrom.

4. A smart heating system as claimed in claim 2 and claim 3, wherein the electronic hub includes a wireless receiver configured to receive the pressure readings and identifiers from the electronic pressure gauges.

5. A smart heating system (10; 110) as claimed in any one of the preceding claims, wherein the user electronic device (20; 120) includes a wireless receiver configured to receive the pressure readings and identifiers from the electronic pressure gauges or the electronic hub.

6. A smart heating system (10; 110) as claimed in any one of the preceding claims, further comprising a master electronic pressure gauge which is at the water circulation system (16) and which is not at the radiators (14a, 14b, 14c, 14d; 114a, 114b; 114c; 114d), the master electronic pressure gauge being communicatively connected with the user electronic device (20; 120) so as to provide a master pressure reading to the user electronic device (20; 120), the user electronic device (20; 120) being configured to display the master pressure reading and/or a derivative thereof.

7. A smart heating system as claimed in claim 6, wherein there are a plurality of electronic pressure gauges which are at the water circulation system and which are not at the radiators, communicatively connected with the user electronic device so as to provide a plurality of water-circulation-system pressure readings to the user electronic device, the user electronic device being configured to display the plurality of water-circulation-system pressure readings and/or a derivative thereof.

8. A smart heating system (10; 110) as claimed in any one of the preceding claims, further comprising a master valve which is at the water circulation system (16) and which is not at the radiators (14a, 14b, 14c, 14d; 114a, 114b; 114c; 114d), for closing and opening the water circulation system (16), and wherein there are a plurality of valves which are at the water circulation system and which are not at the radiators, for isolating portions of the water circulation system.

9. A smart heating system (10; 110) as claimed in any one of the preceding claims, wherein the valves and/or the master valve are electronically actuatable and are communicatively connected to the user electronic device (20; 120), the valves and/or master valve being controllable via the user electronic device (20; 120).

10. A smart heating system (10; 110) as claimed in any one of the preceding claims, wherein each radiator has an electronic pressure gauge upstream of the radiator (14a, 14b, 14c, 14d; 114a, 114b; 114c; 114d) and downstream of the radiator (14a, 14b, 14c, 14d; 114a, 114b; 114c; 114d) and wherein an upstream electronic pressure gauge is at the inlet of the radiator (14a, 14b, 14c, 14d; 114a, 114b; 114c; 114d) and a downstream electronic pressure gauge is at the outlet of the radiator (14a, 14b, 14c, 14d; 114a, 114b; 114c; 114d).

11. A smart heating system (10; 110) as claimed in any one of the preceding claims, wherein each electronic pressure gauge of a radiator (14a, 14b, 14c, 14d; 114a, 114b; 114c; 114d) includes a visual indicator configured to emit a light when the pressure reading is below the predetermined level.

12. A method of identifying a location of a leak in a heating system, the method comprising the steps of:
a) providing a smart heating system (10; 110) as claimed in any one of the preceding claims;
b) the electronic pressure gauges at the radiators (14a, 14b, 14c, 14d; 114a, 114b; 114c; 114d) communicating pressure readings and associated identifiers to the user electronic device (20; 120);
c) determining a discrepancy in the pressure readings and identifying the location of the leak based on the identifier associated with the or each pressure reading having the discrepancy.

13. A leak detection kit for a smart heating system (10; 110) as claimed in any one of claims 1 to 11, the kit comprising:
a plurality of electronic pressure gauges for measuring a water pressure in the radiator (14a, 14b, 14c, 14d; 114a, 114b; 114c; 114d) and/or water circulation system (16) adjacent to the radiator (14a, 14b, 14c, 14d; 114a, 114b; 114c; 114d) to generate a pressure reading, each electronic pressure gauge having an identifier; and
a user electronic device (20; 120) having a user display, the user electronic device (20; 120) being communicatively connected with the electronic pressure gauges so as to be configured to receive the pressure readings and identifiers, and the user electronic device (20; 120) being configured to display pressure readings and identifiers and/or a derivative thereof.

14. A heating-system-leak-detecting device (18a, 18b, 18c, 18d, 18e, 18f, 18g, 18h; 118a, 118b, 118c, 118d, 118e, 118f, 118g, 118h) for a smart heating system (10; 110) as claimed in any one of claims 1 to 11, the heating-system-leak-detecting device (18a, 18b, 18c, 18d, 18e, 18f, 18g, 18h; 118a, 118b, 118c, 118d, 118e, 118f, 118g, 118h) comprising:
a housing;
a valve in the housing;
an electronic pressure gauge in the housing for measuring a water pressure in the radiator (14a, 14b, 14c, 14d; 114a, 114b; 114c; 114d) and/or water circulation system (16) adjacent to the radiator (14a, 14b, 14c, 14d; 114a, 114b; 114c; 114d) to generate a pressure reading, each electronic pressure gauge having an identifier;
a wireless transmitter in the housing for transmitting the pressure reading and identifier; and
a visual indicator in the housing is configured to emit a light when the pressure reading is below the predetermined level.

15. A smart water system (10; 110) comprising:
a water distribution system (16); and
a plurality of valves distributed around the water distribution system,
**characterised in that** there is a plurality of electronic pressure gauges, each electronic pressure gauge being at or adjacent to a valve and configured to measure a water pressure in the water distribution system adjacent to the valve to generate a pressure reading, each electronic pressure gauge having an identifier; and
a user electronic device (20; 120) having a user display, the user electronic device (20; 120) being communicatively connected with the electronic pressure gauges so as to be configured to receive the pressure readings and identifiers, and the user electronic device (20; 120) being configured to display pressure readings and identifiers and/or a derivative thereof.

## Patentansprüche

1. Intelligentes Heizsystem (10; 110) zum Erkennen von Undichtheiten, wobei das intelligente Heizsystem (10; 110) umfasst:
einen Boiler (12) zum Erhitzen von Wasser;
eine Vielzahl von Heizkörpern (14a, 14b, 14c, 14d; 114a, 114b; 114c; 114d);
ein Wasserumlaufsystem (16) zum Transportieren von durch den Boiler (12) erhitztem Wasser zu den Heizkörpern (14a, 14b, 14c, 14d; 114a, 114b; 114c; 114d) und Zurückführen von Wasser von den Heizkörpern (14a, 14b, 14c, 14d; 114a, 114b; 114c; 114d) an den Boiler (12), wobei jeder Heizkörper (14a, 14b, 14c, 14d; 114a, 114b; 114c; 114d) einen Einlass und einen Auslass aufweist, die mit dem Wasserumlaufsystem (16) verbunden sind; und
ein Ventil an oder benachbart zu dem Einlass und/oder den Auslass jedes Heizkörpers (14a, 14b, 14c, 14d; 114a, 114b; 114c; 114d),
**dadurch gekennzeichnet, dass** ein elektronisches Druckmessgerät an jedem Heizkörper (14a, 14b, 14c, 14d; 114a, 114b; 114c; 114d) vorliegt, das dazu konfiguriert ist, einen Wasserdruck in dem Heizkörper (14a, 14b, 14c, 14d; 114a, 114b; 114c; 114d) und/oder dem Wasserumlaufsystem (16) benachbart zu dem Heizkörper (14a, 14b, 14c, 14d; 114a, 114b; 114c; 114d) zu messen, um einen Druckmesswert zu erzeugen, wobei jedes elektronische Druckmessgerät eine Kennung aufweist; und
eine elektronische Benutzervorrichtung (20; 120), die eine Benutzeranzeige aufweist, wobei die elektronische Benutzervorrichtung (20; 120) kommunikativ mit den elektronischen Druckmessgeräten verbunden ist, um dazu konfiguriert zu sein, die Druckmesswerte und die Kennungen zu empfangen, und die elektronische Benutzervorrichtung (20; 120) dazu konfiguriert ist, Druckmesswerte und Kennungen und/oder eine Ableitung davon anzuzeigen.

2. Intelligentes Heizsystem (10; 110) nach Anspruch 1, wobei jedes elektronische Druckmessgerät einen drahtlosen Sender umfasst, der dazu konfiguriert ist, den Druckmesswert und die Kennung zu übertragen.

3. Intelligentes Heizsystem nach Anspruch 1 oder Anspruch 2, ferner umfassend einen elektronischen Verteiler, wobei jedes elektronische Druckmessgerät kommunikativ mit dem elektronischen Verteiler verbunden ist, um den Druckmesswert und die Kennung an den elektronischen Verteiler bereitzustellen, wobei die elektronische Benutzervorrichtung kommunikativ mit dem elektronischen Verteiler verbunden ist, um dazu konfiguriert zu sein, die Druckmesswerte und die Kennungen davon zu empfangen.

4. Intelligentes Heizsystem nach Anspruch 2 und Anspruch 3, wobei der elektronische Verteiler einen drahtlosen Empfänger einschließt, der dazu konfiguriert ist, die Druckmesswerte und die Kennungen von den elektronischen Druckmessgeräten zu empfangen.

5. Intelligentes Heizsystem (10; 110) nach einem der vorhergehenden Ansprüche, wobei die elektronische Benutzervorrichtung (20; 120) einen drahtlosen Empfänger einschließt, der dazu konfiguriert ist, die Druckmesswerte und die Kennungen von den elektronischen Druckmessgeräten oder dem elektronischen Verteiler zu empfangen.

6. Intelligentes Heizsystem (10; 110) nach einem der vorhergehenden Ansprüche, ferner umfassend ein elektronisches Master-Druckmessgerät, das an dem Wasserumlaufsystem (16) ist und das nicht an den Heizkörpern (14a, 14b, 14c, 14d; 114a, 114b; 114c; 114d) ist, wobei das elektronische Master-Druckmessgerät kommunikativ mit der elektronischen Benutzervorrichtung (20; 120) verbunden ist, um einen Master-Druckmesswert an die elektronische Benutzervorrichtung (20; 120) bereitzustellen, wobei die elektronische Benutzervorrichtung (20; 120) dazu konfiguriert ist, den Master-Druckmesswert und/oder eine Ableitung davon anzuzeigen.

7. Intelligentes Heizsystem nach Anspruch 6, wobei eine Vielzahl von elektronischen Druckmessgeräten vorliegt, die an dem Wasserumlaufsystem sind und die nicht an den Heizkörpern sind, kommunikativ mit der elektronischen Benutzervorrichtung verbunden, um eine Vielzahl von Wasserumlaufsystem-Druckmesswerten an die elektronische Benutzervorrichtung bereitzustellen, wobei die elektronische Benutzervorrichtung dazu konfiguriert ist, die Vielzahl von Wasserumlaufsystem-Druckmesswerten und/oder eine Ableitung davon anzuzeigen.

8. Intelligentes Heizsystem (10; 110) nach einem der vorhergehenden Ansprüche, ferner umfassend ein Master-Ventil, das an dem Wasserumlaufsystem (16) ist und das nicht an den Heizkörpern (14a, 14b, 14c, 14d; 114a, 114b; 114c; 114d) ist, zum Schließen und Öffnen des Wasserumlaufsystems (16), und wobei eine Vielzahl von Ventilen vorliegt, die an dem Wasserumlaufsystem sind und die nicht an den Heizkörpern sind, zum Isolieren von Abschnitten des Wasserumlaufsystems.

9. Intelligentes Heizsystem (10; 110) nach einem der vorhergehenden Ansprüche, wobei die Ventile und/oder das Master-Ventil elektronisch betätigt werden können und kommunikativ mit der elektronischen Benutzervorrichtung (20; 120) verbunden sind, wobei die Ventile und/oder das Master-Ventil mittels der elektronischen Benutzervorrichtung (20; 120) steuerbar sind.

10. Intelligentes Heizsystem (10; 110) nach einem der vorhergehenden Ansprüche, wobei jeder Heizkörper ein elektronisches Druckmessgerät dem Heizkörper (14a, 14b, 14c, 14d; 114a, 114b; 114c; 114d) vorgelagert und dem Heizkörper (14a, 14b, 14c, 14d; 114a, 114b; 114c; 114d) nachgelagert aufweist und wobei ein vorgelagertes elektronisches Druckmessgerät an dem Einlass des Heizkörpers (14a, 14b, 14c, 14d; 114a, 114b; 114c; 114d) ist und ein nachgelagertes Druckmessgerät an dem Auslass des Heizkörpers (14a, 14b, 14c, 14d; 114a, 114b; 114c; 114d) ist.

11. Intelligentes Heizsystem (10; 110) nach einem der vorhergehenden Ansprüche, wobei jedes elektronische Druckmessgerät eines Heizkörpers (14a, 14b, 14c, 14d; 114a, 114b; 114c; 114d) einen visuellen Indikator einschließt, der dazu konfiguriert ist, ein Licht zu emittieren, wenn der Druckmesswert unter dem vorbestimmten Niveau liegt.

12. Verfahren zur Identifikation einer Stelle einer Undichtheit in einem Heizsystem, wobei das Verfahren die Schritte umfasst:
a) Bereitstellen eines intelligenten Heizsystems (10; 110) nach einem der vorhergehenden Ansprüche;
b) Kommunizieren von Druckmesswerten und assoziierten Kennungen durch die elektronischen Druckmessgeräte an den Heizkörpern (14a, 14b, 14c, 14d; 114a, 114b; 114c; 114d) an die elektronische Benutzervorrichtung (20; 120);
c) Bestimmen einer Diskrepanz der Druckmesswerte und Identifizieren der Stelle der Undichtheit auf der Basis der Kennung, die mit dem oder jedem Druckmesswert mit der Diskrepanz assoziiert ist.

13. Undichtheitserkennungsbausatz für ein intelligentes Heizsystem (10; 110) nach einem der Ansprüche 1 bis 11, wobei der Bausatz umfasst:
eine Vielzahl von elektronischen Druckmessgeräten zum Messen eines Wasserdrucks in dem Heizkörper (14a, 14b, 14c, 14d; 114a, 114b; 114c; 114d) und/oder dem Wasserumlaufsystem (16) benachbart zu dem Heizkörper (14a, 14b, 14c, 14d; 114a, 114b; 114c; 114d), um einen Druckmesswert zu erzeugen, wobei jedes elektronische Druckmessgerät eine Kennung aufweist; und
eine elektronische Benutzervorrichtung (20; 120), die eine Benutzeranzeige aufweist, wobei die elektronische Benutzervorrichtung (20; 120) kommunikativ mit den elektronischen Druckmessgeräten verbunden ist, um dazu konfiguriert zu sein, die Druckmesswerte und die Kennungen zu empfangen, und die elektronische Benutzervorrichtung (20; 120) dazu konfiguriert ist, Druckmesswerte und Kennungen und/oder eine Ableitung davon anzuzeigen.

14. Heizsystem-Undichtheitserkennungsvorrichtung (18a, 18b, 18c, 18d, 18e, 18f, 18g, 18h; 118a, 118b, 118c, 118d, 118e, 118f, 118g, 118h) für ein intelligentes Heizsystem (10; 110) nach einem der Ansprüche 1 bis 11, wobei die Heizsystem-Undichtheitserkennungsvorrichtung (18a, 18b, 18c, 18d, 18e, 18f, 18g, 18h; 118a, 118b, 118c, 118d, 118e, 118f, 118g, 118h) umfasst:
ein Gehäuse;
ein Ventil in dem Gehäuse;
ein elektronisches Druckmessgerät in dem Gehäuse zum Messen eines Wasserdrucks in dem Heizkörper (14a, 14b, 14c, 14d; 114a, 114b; 114c; 114d) und/oder dem Wasserumlaufsystem (16) benachbart zu dem Heizkörper (14a, 14b, 14c, 14d; 114a, 114b; 114c; 114d), um einen Druckmesswert zu erzeugen, wobei jedes elektronische Druckmessgerät eine Kennung aufweist;
einen drahtlosen Sender in dem Gehäuse zum Übertragen des Druckmesswerts und der Kennung; und
wobei ein visueller Indikator in dem Gehäuse dazu konfiguriert ist, ein Licht zu emittieren, wenn der Druckmesswert unter dem vorbestimmten Niveau liegt.

15. Intelligentes Wassersystem (10; 110), umfassend:
ein Wasserverteilsystem (16); und
eine Vielzahl von Ventilen, die um das Wasserverteilsystem verteilt ist,
**dadurch gekennzeichnet, dass** eine Vielzahl von elektronischen Druckmessgeräten vorliegt, wobei jedes elektronische Druckmessgerät an oder benachbart zu einem Ventil ist und dazu konfiguriert ist, einen Wasserdruck in dem Wasserverteilsystem benachbart zu dem Ventil zu messen, um einen Druckmesswert zu erzeugen, wobei jedes elektronische Druckmessgerät eine Kennung aufweist; und
eine elektronische Benutzervorrichtung (20; 120), die eine Benutzeranzeige aufweist, wobei die elektronische Benutzervorrichtung (20; 120) kommunikativ mit den elektronischen Druckmessgeräten verbunden ist, um dazu konfiguriert zu sein, die Druckmesswerte und die Kennungen zu empfangen, und die elektronische Benutzervorrichtung (20; 120) dazu konfiguriert ist, Druckmesswerte und Kennungen und/oder eine Ableitung davon anzuzeigen.

## Revendications

1. Un système de chauffage intelligent (10 ; 110) destiné à la détection de fuites, ledit système de chauffage intelligent (10 ; 110) comprenant :
une chaudière (12) destinée à chauffer de l'eau ;
une pluralité de radiateurs (14a, 14b, 14c, 14d ; 114a, 114b; 114c ; 114d) ;
un système de circulation d'eau (16) destiné à acheminer l'eau chauffée par la chaudière (12) vers les radiateurs (14a, 14b, 14c, 14d ; 114a, 114b ; 114c ; 114d) et à renvoyer l'eau provenant des radiateurs (14a, 14b, 14c, 14d ; 114a, 114b ; 114c ; 114d) vers la chaudière (12), chaque radiateur (14a, 14b, 14c, 14d ; 114a, 114b ; 114c ; 114d) comportant une entrée et une sortie reliées au système de circulation d'eau (16) ; et
une vanne disposée au niveau ou à proximité de l'entrée et/ou de la sortie de chaque radiateur (14a, 14b, 14c, 14d ; 114a, 114b ; 114c ; 114d),
**caractérisé en ce qu'**un manomètre électronique est disposé au niveau de chaque radiateur (14a, 14b, 14c, 14d ; 114a, 114b ; 114c ; 114d), configuré pour mesurer une pression d'eau dans le radiateur (14a, 14b, 14c, 14d ; 114a, 114b ; 114c ; 114d) et/ou dans le système de circulation d'eau (16) à proximité du radiateur (14a, 14b, 14c, 14d ; 114a, 114b ; 114c ; 114d), afin de générer un relevé de pression, chaque manomètre électronique étant associé à un identifiant ;
un dispositif électronique d'utilisateur (20 ; 120) comprenant un écran d'affichage d'utilisateur, edit dispositif électronique d'utilisateur (20 ; 120) étant connecté de manière communicative avec les manomètres électroniques de manière à être configuré pour recevoir les relevés de pression et les identifiants, et ledit dispositif électronique d'utilisateur (20 ; 120) étant configuré pour afficher les relevés de pression et les identifiants et/ou une valeur dérivée de ceux-ci.

2. Un système de chauffage intelligent (10 ; 110) selon la revendication 1, dans lequel chaque manomètre électronique comprend un émetteur sans fil configuré pour transmettre le relevé de pression et l'identifiant.

3. Un système de chauffage intelligent selon la revendication 1 ou la revendication 2, comprenant en outre un concentrateur électronique, chaque manomètre électronique étant connecté de manière communicative audit concentrateur électronique de manière à fournir le relevé de pression et l'identifiant audit concentrateur électronique, le dispositif électronique d'utilisateur étant connecté de manière communicative audit concentrateur électronique de façon à être configuré pour recevoir les relevés de pression et les identifiants à partir de celui-ci.

4. Un système de chauffage intelligent selon les revendications 2 et 3, dans lequel le concentrateur électronique comprend un récepteur sans fil configuré pour recevoir les relevés de pression et les identifiants provenant des manomètres électroniques.

5. Système de chauffage intelligent (10 ; 110) selon l'une quelconque des revendications précédentes, dans lequel le dispositif électronique d'utilisateur (20 ; 120) comprend un récepteur sans fil configuré pour recevoir les relevés de pression et les identifiants à partir des manomètres électroniques ou du concentrateur électronique.

6. Un système de chauffage intelligent (10 ; 110) selon l'une quelconque des revendications précédentes, comprenant en outre un manomètre électronique maître qui est situé au niveau du système de circulation d'eau (16) et qui n'est pas situé au niveau des radiateurs (14a, 14b, 14c, 14d ; 114a, 114b ; 114c ; 114d), ledit manomètre électronique maître étant connecté de manière communicative au dispositif électronique d'utilisateur (20 ; 120) de manière à fournir un relevé de pression maître au dispositif électronique d'utilisateur (20 ; 120), ledit dispositif électronique d'utilisateur (20 ; 120) étant configuré en outre pour afficher le relevé de pression maitre et/ou un dérivé de celle-ci.

7. Un système de chauffage intelligent selon la revendication 6, dans lequel il est prévu une pluralité de manomètres électroniques, qui sont situés au niveau du système de circulation d'eau et qui ne sont pas situés au niveau des radiateurs, connectés de manière communicative au dispositif électronique d'utilisateur de manière à fournir une pluralité de relevés de pression du système de circulation d'eau audit dispositif électronique d'utilisateur, ledit dispositif électronique d'utilisateur étant configuré pour afficher la pluralité de relevés de pression du système de circulation d'eau et/ou une valeur dérivée de ceux-ci.

8. Un système de chauffage intelligent (10 ; 110) selon l'une quelconque des revendications précédentes, comprenant en outre une vanne maîtresse qui est située au niveau du système de circulation d'eau (16) et qui n'est pas située au niveau des radiateurs (14a, 14b, 14c, 14d ; 114a, 114b ; 114c ; 114d), pour fermer et ouvrir le système de circulation d'eau (16), et dans lequel il est prévu une pluralité de vannes qui sont situées au niveau du système de circulation d'eau et qui ne sont pas situées au niveau des radiateurs, afin d'isoler des parties du système de circulation d'eau.

9. Un système de chauffage intelligent (10 ; 110) selon l'une quelconque des revendications précédentes, dans lequel les vannes et/ou la vanne maîtresse peuvent être actionnées par voie électronique et sont connectées de manière communicative au dispositif électronique d'utilisateur (20 ; 120), lesdites vannes et/ou la vanne maîtresse pouvant être commandée via le dispositif électronique d'utilisateur (20 ; 120).

10. Un système de chauffage intelligent (10 ; 110) selon l'une quelconque des revendications précédentes, dans lequel chaque radiateur est doté d'un manomètre électronique en amont du radiateur (14a, 14b, 14c, 14d ; 114a, 114b ; 114c ; 114d) et en aval du radiateur (14a, 14b, 14c, 14d ; 114a, 114b ; 114c ; 114d), et dans lequel un manomètre électronique en amont est situé au niveau de l'entrée du radiateur (14a, 14b, 14c, 14d ; 114a, 114b ; 114c ; 114d) et un manomètre électronique en aval est situé au niveau de la sortie du radiateur (14a, 14b, 14c, 14d ; 114a, 114b ; 114c ; 114d).

11. Un système de chauffage intelligent (10 ; 110) selon l'une quelconque des revendications précédentes, dans lequel chaque manomètre électronique d'un radiateur (14a, 14b, 14c, 14d ; 114a, 114b ; 114c ; 114d) est doté d'un indicateur visuel configuré pour émettre une lumière lorsque le relevé de pression est inférieur à un niveau prédéterminé.

12. Un procédé d'identification de l'emplacement d'une fuite dans un système de chauffage, ledit procédé comprenant les étapes consistant à :
a) fournir un système de chauffage intelligent (10 ; 110) selon l'une quelconque des revendications précédentes ;
b) les manomètres électroniques au niveau des radiateurs (14a, 14b, 14c, 14d ; 114a, 114b ; 114c ; 114d) communiquant les relevés de pression et les identifiants associés au dispositif électronique d'utilisateur (20 ; 120) ;
c) déterminer une divergence dans les relevés de pression et identifier l'emplacement de la fuite sur la base de l'identifiant associé au ou à chaque relevé de pression présentant la divergence.

13. Un kit de détection de fuites pour un système de chauffage intelligent (10 ; 110) selon l'une quelconque des revendications 1 à 11, ledit kit comprenant :
une pluralité de manomètres électroniques destinés à mesurer une pression d'eau dans le radiateur (14a, 14b, 14c, 14d ; 114a, 114b ; 114c ; 114d)
et/ou dans le système de circulation d'eau (16) adjacent au radiateur (14a, 14b, 14c, 14d ; 114a, 114b ; 114c ; 114d) afin de générer un relevé de pression, chaque manomètre électronique possédant un identifiant ; et
un dispositif électronique d'utilisateur (20 ; 120) doté d'un écran d'affichage d'utilisateur, le dispositif électronique d'utilisateur (20 ; 120) étant connecté de manière communicative aux manomètres électroniques de manière à être configuré pour recevoir les relevés de pression et les identifiants, et le dispositif électronique d'utilisateur (20 ; 120) étant configuré en outre pour afficher les relevés de pression et les identifiants et/ou une valeur dérivée de ceux-ci.

14. Un dispositif de détection de fuites de système de chauffage (18a, 18b, 18c, 18d, 18e, 18f, 18g, 18h ; 11Sa, 11Sb, 11Sc, 11Sd, 11Se, 11Sf, 11Sg, 11Sh) destiné à un système de chauffage intelligent (10 ; 110) selon l'une quelconque des revendications 1 à 11, ledit dispositif de détection de fuites de système de chauffage (18a, 18b, 18c, 18d, 18e, 18f, 18g, 18h ; 118a, 118b, 118c, 118d, 118e, 118f, 118g, 118h) comprenant en outre :
un boîtier ;
une vanne dans le boîtier ;
un manomètre électronique dans le boîtier destiné à mesurer une pression d'eau dans le radiateur (14a, 14b, 14c, 14d ; 114a, 114b ; 114c ; 114d) et/ou dans le système de circulation d'eau (16) adjacent au radiateur (14a, 14b, 14c, 14d ; 114a, 114b ; 114c ; 114d) afin de générer un relevé de pression, chaque manomètre électronique possédant un identifiant ;
un émetteur sans fil dans le boîtier pour transmettre le relevé de pression et l'identifiant ; et
un indicateur visuel dans le boîtier configuré pour émettre une lumière lorsque le relevé de pression est inférieur au niveau prédéterminé.

15. Un système d'eau intelligent (10 ; 110) comprenant :
un système de distribution d'eau (16) ; et
une pluralité de vannes réparties autour du système de distribution d'eau, **caractérisé en ce qu'**il est prévu une pluralité de manomètres électroniques, chaque manomètre étant situé au niveau ou à proximité d'une vanne et configuré pour mesurer une pression d'eau dans le système de distribution d'eau à proximité de la vanne afin de générer un relevé de pression, chaque manomètre électronique possédant un identifiant ; et
un dispositif électronique d'utilisateur (20 ; 120) comprenant un écran d'affichage d'utilisateur, ledit dispositif électronique d'utilisateur (20 ; 120) étant connecté de manière communicative avec les manomètres électroniques de manière à être configuré pour recevoir les relevés de pression et les identifiants, et ledit dispositif électronique d'utilisateur (20 ; 120) étant configuré pour afficher les relevés de pression et les identifiants et/ou une valeur dérivée de ceux-ci.
